Europäisches Patentamt

European Patent Office

Office européen des brevets

(19)

(11) EP 0 599 144 B1

(12) EUROPÄISCHE PATENTSCHRIFT

(45) Veröffentlichungstag und Bekanntmachung des Hinweises auf die Patenterteilung:
07.04.1999 Patentblatt 1999/14

(51) Int Cl.⁶: **H04N 5/208**, H04N 5/21, H04N 5/205

(21) Anmeldenummer: 93118270.3

(22) Anmeldetag: 11.11.1993

(54) **Verfahren zur Erzeugung eines modifizierten Videosignals**

Method for generating a modified video signal

Procédé de génération d'un signal vidéo modifié

(84) Benannte Vertragsstaaten:
DE FR GB IT NL

(30) Priorität: 24.11.1992 DE 4239396

(43) Veröffentlichungstag der Anmeldung:
01.06.1994 Patentblatt 1994/22

(73) Patentinhaber: Micronas Intermetall GmbH
79108 Freiburg (DE)

(72) Erfinder:
• Desor, Hans-Jürgen, Dipl.-Ing.
D-79211 Denzlingen (DE)

• Köhne, Heinrich,1 Dipl.-Ing.
D-79279 Vörstetten (DE)

(56) Entgegenhaltungen:
EP-A- 0 529 129          FR-A- 2 648 659
GB-A- 2 142 204

• FERNSEH- UND KINOTECHNIK, Bd. 43,Nr. 7, 1989 HEIDELBERG DE, Seiten 356-362, VOGT 'Zweidimensionale digitale Aperturentzerrung für HDTV-Kameras: Teil 1. Verarbeitung gradationsvorentzerrter Kamerasignale'

## Beschreibung

Die Erfindung betrifft ein Verfahren zur Erzeugung eines modifizierten Videosignals, das sich aus der Summe eines, mindestens durch eine Frequenzbandbreitenbegrenzung und eine Amplitudenbegrenzung, von einem digitalisierten Eingangsvideosignal abgeleiteten Korrektursignal und einem um die Bearbeitungszeit des Korrektursignals verzögerten Eingangsvideosignal zusammensetzt.

Solche Verfahren bei denen das Videosignal modifiziert wird, werden zur Korrektur des Frequenzganges und/oder zur Verbesserung des Bildschärfeeindrucks bei der Bildschirmdarstellung verwendet.

Aus der DE-PS 34 23 112, DE-OS 39 19 817 und der Zeitschrift "Fernseh- und Kino-Technik " 43. Jahrgang, Nr. 7/1989, Seite 356 bis 362 "Zweidimensionale digitale Aperturentzerrung für HDTV-Kameras" von C.Vogt sind beispielsweise Verfahren bekannt, bei denen zur Aperturkorrektur von digitalisierten Videosignalen die Farbwertsignale einem digitalen Filter zugeführt werden, dessen Ausgangssignal zur Rauschsignalunterdrückung einer einstellbaren Coring-Kennlinie unterzogen wird und anschließend wieder dem zeitverzögerten Farbwertsignal des Vidosignals hinzuaddiert wird.

Zusätzlich zu der aus diesen Schriften bekannten Problematik der Rauschsignalunterdrückung sollen Videosignaländerungen mit kleiner oder mittlerer Amplitude durch das Korrektursignal hervorgehoben werden, um auch feine Bilddetails zu betonen. Große Amplitudensprünge des Videosignals dagegen sollen nicht stärker hervorgehoben - versteilert - werden, da dies einerseits zu einem unnatürlichen plastischen Effekt führt und andererseits die dadurch hervorgerufene große Amplitude des modifizierten Videosignals Strahl-Defokussierungen bei feinen Details (Blooming) bewirken kann.

Eine bekannte Möglichkeit ein Korrektursignal zu erzeugen mit dem ein modifiziertes Videosignal erzeugt werden kann, das diese Eigenschaften zumindest teilweise aufweist, besteht darin, mittels einer Amplitudenbegrenzung das Korrektursignal bis zu einer vorbestimmten Amplitude unverändert oder mit einer vorbestimmten Dämpfung bzw. Verstärkung zu übertragen und bei Überschreitung dieser vorbestimmten Amplitude eine konstante, maximale Amplitude zu übertragen.

Insbesondere in digitalen Systemen können sich solche Übertragungsfunktion der Amplitudenbegrenzung nachteilig auswirken, da das so begrenzte Korrektursignal Verzerrungen in Form von Oberwellen enthält, die in Abhängigkeit von der Aussteuerung der verwendeten Übertragungsfunktion, sowie dem Verhältnis von Nutzsignalfrequenzbereich und Abtastfrequenz, in den Nutzsignalfrequenzbereich des Korrektursignals zurückgefaltet werden können und dort störende Aliaskomponenten erzeugen.

Es ist Aufgabe der Erfindung ein Verfahren zur Erzeugung eines modifizierten Videosignals anzugeben bei dem die Störsignale aus der Amplitudenbegrenzung des Korrektursignals möglichst niedrig gehalten werden. Die Aufgabe wird gelöst durch das Verfahren nach Anspruch 1 gemäß Anspruch 1 verwendet das erfindungsgemäße Verfahren für die Amplitudenbegrenzung eine Übertragungsfunktion, die exakt durch eine ganze rationale Funktion n-ten Grades,

$$Y = a_0 + a_1 * x + a_2 * x^2 + a_3 * x^3 \ldots a_n * x^n$$

mit $1 < n < f_n/f_s$ und n ganzzahlig beschrieben werden kann, wobei $f_n$ die Nyquistfrequenz der gewählten Abtastfrequenz und $f_s$ die Maximalfrequenz des frequenzbandbreitenbegrenzten Videosignals ($Y_{inf}$)ist und x das Eingangssignal der Amplitudenbegrenzung (32, 42, 52), $a_0$ bis $a_n$ Skalierungsfaktoren und y das Ausgangssignal der Amplitudenbegrenzung (32,42,52) bedeuten.

Diese Art von Übertragungsfunktionen hat die Eigenschaft, daß nur eine vorherbestimmbare, endliche, vom Grad der Funktion abhängige Zahl von Oberwellen entstehen kann. Bei Systemen mit digitaler Signalverarbeitung kann aus der so vorherbestimmbaren höchsten Oberwelle und der Maximalfrequenz des frequenzbandbreitenbegrenzten Videosignals, der Grad der Funktion bzw. die erforderliche Abtastfrequenz so gewählt werden, daß keine Aliaskomponenten entstehen.

Oberwellen, die in den Frequenzbereich zwischen der Maximal frequenz des frequenzbandbreitenbegrenzten Videosignals und der Nyquistfrequenz fallen, können durch entsprechende Tiefpaßfilterung nach der Amplitudenbegrenzung unterdrückt werden.

In einer bevorzugten Weiterbildung des erfindungsgemäßen Verfahrens kann die Übertragungsfunktion der Amplitudenbegrenzung durch die Funktion

$$y = a_0 * x - a_1 * x^n \ (1 < n < \frac{f_n}{f_s})$$

beschrieben werden, wobei x das Eingangssignal der Amplitudenbegrenzung, $a_0$, $a_1$ Skalierungsfaktoren und y das Ausgangssignal der Amplitudenbegrenzung bedeuten.

Diese Übertragungsfunktionen haben den Vorteil, daß bei sinusförmigem Eingangssignal nur n-1 Oberwellen entstehen und insbesondere bei geradzahligem Grad der Funktion nur geradzahlige Oberwellen entstehen, die den Bildeindruck nur unwesentlich beeinflussen.

In einer weiteren besonders vorteilhaften Weiterbildung des erfindungsgemäße Verfahrens wird eine Übertragungsfunktion mit einer parabelförmigen Übertragungskennlinie zur Amplitudenbegrenzung verwendet, deren Verlauf durch die Formel

$$y = \frac{a}{b^2} * [\, 2bx - (sgn\, x) * x^2\,] \qquad |x| \le 2b$$

bestimmt wird, wobei y das Ausgangssignal der Amplitudenbegrenzung, x das Eingangssignal der Amplitudenbegrenzung bedeuten. Über den Skalierungsfaktoren a wird die maximal mögliche Amplitude des Ausgangssignals der Amplitudenbegrenzung eingestellt. Mit dem Skalierungsfaktor 2b wird der Arbeitsbereich für das Eingangssignal der Amplitudenbegrenzung so eingestellt, daß das erwartete Eingangssignal den aus dem Skalierungsfaktor 2b resultierenden Maximalwert nicht überschreitet.

Durch Variation des Skalierungsfaktors 2b, unter Berücksichtigung der oben angegebenen Grenze, kann eingestellt werden bei welcher Amplitude des Eingangssignals x der Maximalwert des Ausgangssignals y erreicht wird.

Diese parabelförmige Kennlinie erzeugt bei sinusförmigem Eingangssignal nur eine Störkomponente mit der doppelten Frequenz und erlaubt damit eine im Verhältnis zum frequenzbandbreitenbegrenzten Videosignal kleine Abtastfrequenz für die digitale Signalverarbeitung.

Diese Oberwelle, und die bei anderer Signalform entstehenden Differenz- und Summensignalkomponenten, lassen sich durch einfache Tiefpassfilter abtrennen und werden nicht in das Nutzsignalfrequenzband zurückgefaltet.

Durch diese Übertragungsfunktion der Amplitudenbegrenzung können kleine und mittlere Amplituden des frequenzbandbreitenbegrenzten Eingangsvideosignals angehoben bzw. unverändert übertragen und große Amplituden abgesenkt werden, wobei die Verstärkung von kleineren zu größeren Amplituden hin stetig abnimmt.

Durch eine vor der Amplitudenbegrenzung durchgeführte Skalierung des frequenzbandbreitenbegrenzten Videosignals kann der gewünschte Aussteuerbereich der Übertragungsfunktion eingestellt werden.

Durch eine vorgeschaltete Rauschunterdrückung können kleine Signalanteile vollständig oder teilweise unterdrückt werden und damit deren Anhebung durch die Übertragungsfunktion der nachfolgende Amplidudenbegrenzung verhindert werden, die kleine Amplituden, und damit das nicht erwünschte Rauschen, besonders stark anhebt.

Da sich positive und negative Signalsprünge des Eingangsvideosignals unterschiedlich auf den Bildeindruck auswirken, kann eine für positive und negative Eingangsvideosignale unterschiedliche Einstellung der Skalierung vorgesehen werden.

Zur Bestimmung der Ausgangssignale der Amplitudenbegrenzung werden vorteilhafterweise Stützwerte des Verlauf der Übertragungsfunktion in einem mit dem Wert des Eingangssignals adressierbaren Speicher bzw. Speicherbereich abgespeichert. Diese sehr einfache "Tabelle" zur Bestimmung des Ausgangssignals ermöglicht eine sehr schnelle und einfache Berechnung der Ausgangssignale, wobei bei der Dimensionierung des Speichers bzw. Speicherbereichs der hier auftretende Quantisierungsfehler berücksichtigt werden muß.

Erfolgt vor der Amplitudenbegrenzung eine Interpolation des Eingangssignals mit der doppelten Abtastrate, die nach der Amplitudenbegrenzung durch eine als Tiefpassfilterung wirkende Dezimation rückgängig gemacht wird, so ist der Bereich der digitalen Signalverarbeitung, der zur Vermeidung von Aliaskomponenten mit einem entsprechend dem erfindungsgemäßen Verfahren bestimmten Verhältnis zwischen, Grad der Übertragungsfunktion und Verhältnis von Nutzsignalfrequenzbereich und Abtastfrequenz arbeitet, auf diesen Bereich der digitalen Signalverarbeitung begrenzbar.

In einer Weiterbildung der Erfindung wird die erhöhte Abtastfrequenz dadurch vermieden, daß vor der Amplitudenbegrenzung durch Interpolation eine Aufspaltung des mindestens frequenzbandbreitenbegrenzten Eingangsvideosignals in zwei Signale erfolgt, die parallel jeweils einer Amplitudenbegrenzung unterzogen werden und nach einer als Tiefpassfilerung wirkenden Dezimation wieder zusammengeführt werden.

Bei dieser Weiterbildung ist es zusätzlich möglich, die zur Bestimmung des Ausgangssignals der Amplitudenbegrenzung in einem Speicher abgespeicherten Stützwerte des Verlaufs der Übertragungsfunktion auf zwei Speicher aufzuspalten, von denen einer dieser Speicher die geraden und der andere Speicher die ungeraden Stützwerte des Verlaufs der Übertragungsfunktion enthält.

Durch diese Aufteilung bleibt der Speicherplatzaufwand trotz Aufteilung in zwei Amplitudenbegrenzungen gleich.

Die Erfindung wird im Folgenden an Hand der Zeichnungen näher erläutert. Darin zeigen:

Fig.1 ein Blockschaltbild einer Anordnung in der das erfindungsgemäße Verfahren zur Erzeugung eines modifizierten Videosignals verwendet wird,

Fig.2 ein Blockschaltbild einer zweigeteilten Amplitudenbegrenzung ,

Fig.3 ein Beispiel für den Verlauf einer Übertragungsfunktion der Amplitudenbegrenzung,

Fig.4 den Verlauf der Verstärkung bzw. Dämpfung dieser Übertragungsfunktion.

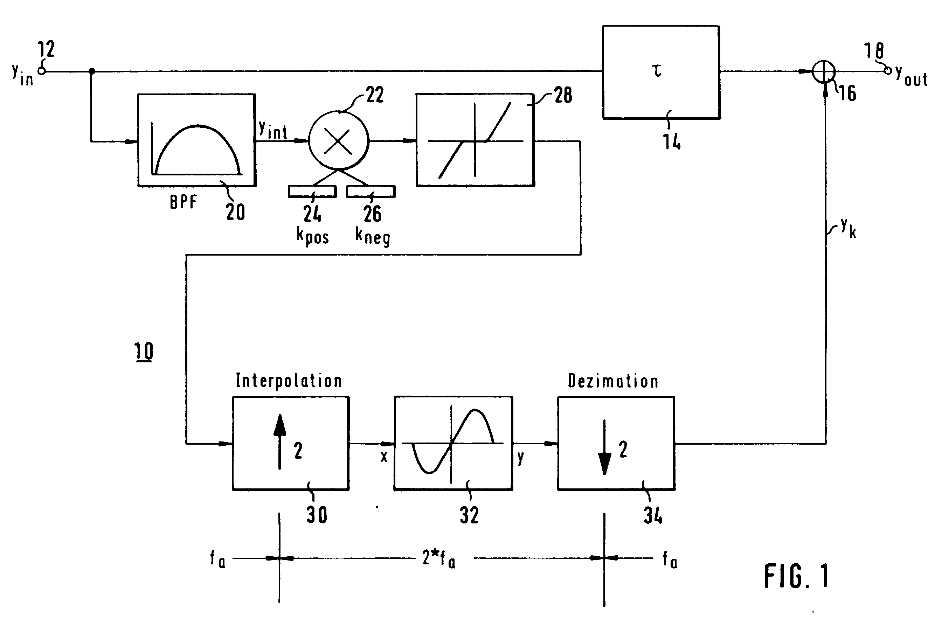

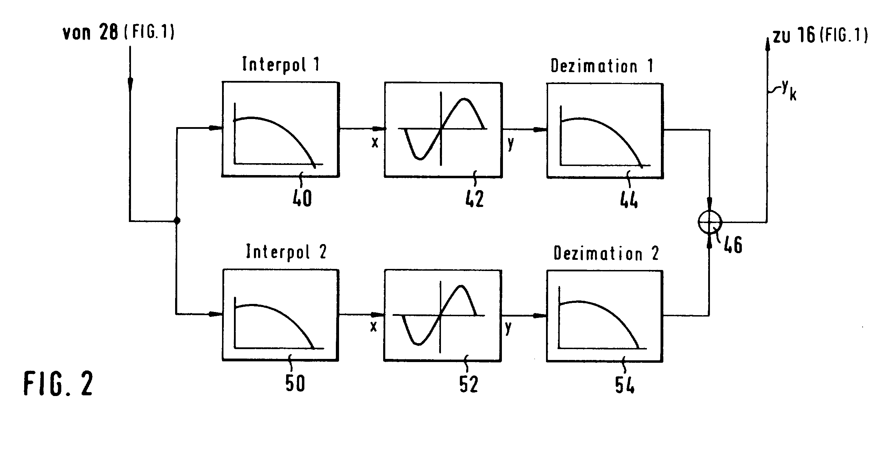

Fig.1 zeigt ein Blockschaltbild einer Anordnung in der das erfindungsgemäße Verfahren zur Erzeugung eines modifizierten Videosignals verwendet wird. Diese Blockschaltbild kann sowohl als Blockschaltbild einer entsprechenden Schaltungsanordnung zur Durchführung des Verfahrens gelten, als auch als Signalflußplan eines digitalen Signalprozessors, der ein Eingangsvideosignal entsprechend dem erfindungsgemäßen Verfahren bearbeitet.

Das an einem Eingang 12 anliegende digitalisierte Eingangsvideosignal $Y_{in}$ wird über eine Verzögerung 14, zu einem Eingang einer Summierungsstufe 16 geführt, deren zweitem Eingang ein Korrektursignal $Y_k$ zugeführt wird und die aus der Summe dieser beiden Signale das modifizierte Videosignal $Y_{out}$ bildet und an einen Ausgang 18 abgibt. Die Verzögerungszeit $\tau$ der Verzögerung 14 entspricht der Zeit, die für die im folgenden beschriebenen Erzeugung des Korrektursignals $Y_k$ aus dem digitalisierten Eingangsvideosignal $Y_{in}$ benötigt wird.

Zur Erzeugung des Korrektursignals $Y_k$ wird das digitalisierte Eingangsvideosignal $Y_{in}$ zunächst einer Frequenzbandbreitenbegrenzung 20 unterzogen, durch die bestimmt werden kann welche Frequenzbereiche des Eingangsvideosignals $Y_{in}$ das zu modifizierende Videosignal $Y_{out}$ verändern sollen. Nach dieser Frequenzbandbreitenbegrenzung mit dem Ausgangssignal $Y_{inf}$ erfolgt eine Skalierung 22 mit der der Aussteuerbereich der nachfolgenden Amplitudenbegrenzung eingestellt werden kann. Diese Skalierung verwendet für positive und negative Eingangsamplituden die in Speichern 24 und 26 abgelegten Skalierungsfaktoren $k_{pos}$ und $k_{neg}$, die sowohl gleiche als auch unterschiedliche Werte aufweisen können.

In einer auf die Skalierung 22 folgenden Rauschsignalunterdrückung 28, die für Amplituden, die kleiner sind als eine vorbestimmte Amplitude sind eine Verstärkung von 0 und für solche die größer als die vorbestimmte Amplitude eine konstante Verstärkung aufweist, werden kleine Signalanteile vollständig unterdrückt und damit deren Anhebung in der nachfolgenden Amplitudenbegrenzung verhindert.

Auf diese Rauschsignalunterdrückung 28 folgt vor einer Amplitudenbegrenzung 32, eine Interpolation 30 mit $H_{(z)}=(1+z^{-1})(1+1,25z^{-1}+z^{-2})/6,5$ und der doppelten Abtastrate $2f_a$, die durch eine an die Amplitudenbegrenzung 32 anschließende Dezimation 34 mit $H_{(z)}=(1+1,25z^{-1}+z^{-2})/3,25$ wieder rückgängig gemacht wird.

In Verbindung mit dieser doppelten Abtastrate $2f_a$ wird in der Amplitudenbegrenzung 32 eine Übertragungsfunktion mit einer parabelförmigen Kennlinie verwendet, deren Verlauf durch die Funktion

$$y= \frac{a}{b^2} * [\, 2bx - (sgn\, x) * x^2 ] \qquad |x| \leq 2b$$

bestimmt wird und bei der maximal Störsignale mit der doppelten Frequenz des Nutzsignals auftreten können.

Durch diese "lokale" Interpolation auf die doppelte Abtastrate bzw. doppelte Verarbeitungsrate wird vermieden, daß der Aufwand einer höheren Abtastrate bzw. Verarbeitungsgeschwindigkeit in der gesamten digitalen Signalverarbeitung erfolgen muß und gleichzeitig sichergestellt, daß die bei der Amplitudenbegrenzung 32 auftretenden Störsignale nicht zu Aliaskomponenten im Korrektursignal $Y_k$ führen können. Das vom Ausgang der Dezimation 34, die gleichzeitig die Wirkung einer Tiefpassfilterung hat, abgegebene Korrektursignal $Y_k$ enthält somit nur noch sehr geringe Oberwellenanteile und keine Aliaskomponenten.

Im Blockschaltbild der Fig. 2 wird ein Beispiel für eine Realisierung angeben, mit der die Anhebung der Abtastrate durch eine zweigeteilte, parallele Amplitudenbegrenzung vermieden wird.

Die Interpolation 30 bzw. Dezimation 36 kann dazu in eine parallele Struktur umgerechnet werden, die nur mit der einfachen Abtastrate $f_a$ arbeitet.

Auf die Rauschsignalunterdrückung 28 folgt bei dieser Realisierung vor der zweigeteilten, parallelen Amplitudenbegrenzung 42 und 52 eine Interpolation 40 mit $H_{(z)}=(2,25+z^{-1})/3,25$ für den ersten Zweig und parallel dazu eine Interpolation 50 mit $H_{(z)}=(1+2,25z^{-1})/3,25$ für den zweiten Zweig, die durch eine an die parallelen Amplitudenbegrenzungen 42 und 52 anschließende Dezimation 44 bzw. 54 mit $H_{(z)}=z^{-1}(1+2,25z^{-1})/3,25$ bzw. $H_{(z)}=(1+2,25z^{-1})/3,25$ wieder rückgängig gemacht wird. Zusammengeführt werden die Ausgangssignale der Dezimationen 44 und 54 durch eine Summierungsstufe 46, deren Ausgang das Korrektursignal $Y_k$ liefert.

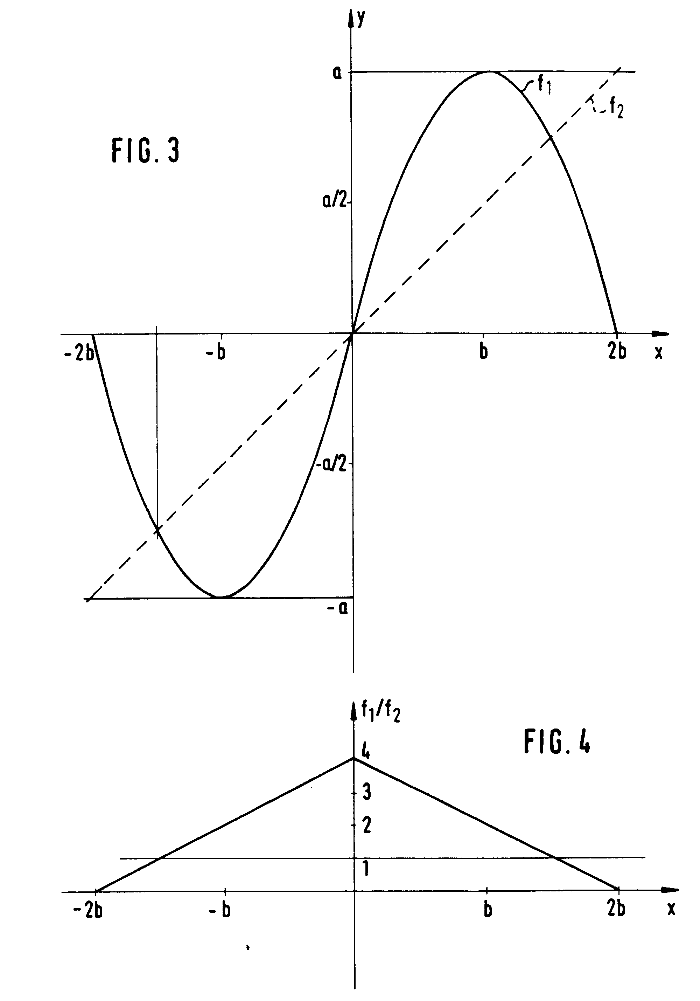

In Fig. 3 ist als Beispiel die Abhängigkeit f1 des Ausgangssignals y vom Eingangssignal x der in der Amplitudenbegrenzung 32 (Fig. 1) verwendeten parabelförmige Kennlinie dargestellt. Zum Vergleich ist in dieser Darstellung eine lineare Übertragungsfunktion f2 mit der Funktion y=(a/2b)*x eingezeichnet. Der Skalierungsfaktor a der Übertragungsfunktion bestimmt die maximale

$$y= \frac{a}{b^2} * [\, 2bx - (sgn\, x) * x^2 ] \qquad |x| \leq 2b$$

Ausgangsamplitude bei halber Maximalaussteuerung des Eingangssignals. Der Wert des Skalierungsfaktor 2b kennzeichnet die Nulldurchgänge der Kennlinie (bei $x \neq 0$) bis zu der diese Übertragungsfunktion sinnvollerweise für eine Amplitudenbegrenzung verwendet werden kann. Überschreitet das Eingangssignal den Betrag von 2b, so erfolgt eine unerwünschte Vorzeichenumkehr und eine exponentielle Anhebung des Ausgangssignals.

Diese Übertragungsfunktion ist daher so bemessen, daß keine Eingangssignale auftreten können, die größer sind als das durch den Wert des Skalierungsfaktors 2b vorbestimmte größte Eingangssignal.

Sowohl durch die Wahl eines größeren Wertes für den Skalierungsfaktor 2b als auch durch Variation der Skalierung 22 (Fig. 1) kann der Aussteuerbereich der Kennlinie f1 eingestellt werden, wobei der Schnittpunkt der Kennlinien f1 und f2 kennzeichnet bis zu welchem Wert der Eingangsspannung x, eine gegenüber der linearen Funktion f2 größere Verstärkung aufweist .

In Fig.4 ist der auf die lineare Übertragungsfunktion f2 normierte Verlauf der Verstärkung bzw. Dämpfung der parabelförmigen Übertragungsfunktion f2 über die Eingangssignalaussteuerung aufgetragen.

$$\frac{f1}{f2} = \frac{\frac{a}{b^2} * [2bx - (sgnx)*x^2]}{\frac{a}{2b}*x} = 4 - \frac{2}{b} * (sgnx)\ x$$

Ausgehend von einer vierfachen Verstärkung für Eingangssignale um Null sinkt die Verstärkung kontinuierlich mit steigendem Betrag des Eingangssignals x bis auf Null bei den Nulldurchgängen $|x| = 2b$ der Übertragungsfunktion f1 ab.

## Patentansprüche

1. Verfahren zur Erzeugung eines modifizierten Videosignals, das sich aus der Summe eines, mindestens durch eine Frequenzbandbreitenbegrenzung und eine Amplitudenbegrenzung, von einem digitalisierten Eingangsvideosignal abgeleiteten Korrektursignal und einem um die Bearbeitungszeit des Korrektursignal verzögerten Eingangsvideosignal zusammensetzt, **dadurch gekennzeichnet,** daß die Übertragungsfunktion der Amplitudenbegrenzung (32, 42,52) exakt durch eine ganze rationale Funktion n-ten Grades

$$Y = a_0 + a_1 * x + a_2 * x^2 + a_3 * x^3 \dots a_n * x^n$$

mit $1 < n < f_n/f_s$ *und n ganzzahlig* beschrieben werden kann, wobei $f_n$ die Nyquistfrequenz *der gewählten Abtastfrequenz* und $f_s$ die Maximalfrequenz des frequenzbandbreitenbegrenzten Videosignals $(Y_{inf})$ ist und x das Eingangssignal der Amplitudenbegrenzung (32, 42, 52), $a_0$ bis $a_n$ Skalierungsfaktoren und y das Ausgangssignal der Amplitudenbegrenzung (32,42,52) bedeuten.

2. Verfahren nach Anspruch 1, **dadurch gekennzeichnet,** daß die Übertragungsfunktion der Amplitudenbegrenzung durch die Funktion

$$y = a_0 * x - a_1 * x^n\ (1 < n < \frac{f_n}{f_s})$$

beschrieben werden kann, wobei x das Eingangssignal der Amplitudenbegrenzung (32, 42, 52), $a_0$ und $a_1$ Skalierungsfaktoren und y das Ausgangssignal der Amplitudenbegrenzung (32,42,52) bedeuten.

ten.

3. Verfahren nach Anspruch 2, **dadurch gekennzeichnet**, daß zur Amplitudenbegrenzung (32, 42, 52) eine Übertragungsfunktion mit einer parabelförmigen Kennlinie (fl) verwendet wird, deren Verlauf durch die Funktion

$$y = \frac{a}{b^2} * [\ 2bx - (sgn\ x) * x^2]\qquad |x| \le 2b$$

bestimmt wird, wobei y das Ausgangssignal der Amplitudenbegrenzung (32, 42,52), x das Eingangssignal der Amplitudenbegrenzung (32, 42, 52) bedeuten und über die Skalierungsfaktoren a und 2b der Maximalwert des Ausgangssignals und der Maximalwert des Eingangssignals voreingestellt werden.

4. Verfahren nach einem der vorhergehenden Ansprüche, **dadurch gekennzeichnet**, daß nach der Amplitudenbegrenzung (32, 42, 52) eine Tiefpassfilterung (34, 44, 54) zur Unterdrückung der Oberwellen erfolgt.

5. Verfahren nach einem der vorhergehenden Ansprüche, **dadurch gekennzeichnet,** daß vor der Amplitudenbegrenzung (32, 42, 52) eine Skalierung (22) und/oder eine Rauschsignalunterdrückung (28) des frequenzbandbreitenbegrenzten Eingangsvideosignals $(Y_{inf})$ bzw. Eingangssignals x der Amplitudenbegrenzung erfolgt.

6. Verfahren nach Anspruch 5, **dadurch gekennzeichnet**, daß für positive und negative Eingangssignale die Skalierung (22) mit unterschiedlichen Werten $(k_{pos}, k_{neg})$ erfolgt.

7. Verfahren nach einem der vorhergehenden Ansprüche, **dadurch gekennzeichnet**, daß zur Bestimmung des Ausgangssignals der Amplitudenbegrenzung (32, 42, 52) Stützwerte des Verlauf der Übertragungsfunktion in einem mit dem Wert des Eingangssignals adressierbaren Speicher abgespeichert sind.

8. Verfahren nach einem der vorhergehenden Ansprüche, **dadurch gekennzeichnet,** daß vor der Amplitudenbegrenzung eine Interpolation (30) mit der doppelten Abtastrate erfolgt, die nach der Amplitudenbegrenzung (32) durch eine Dezimation (34) rückgängig gemacht wird.

9. Verfahren nach einem der Ansprüche 1 bis 7, **dadurch gekennzeichnet,** daß vor der Amplitudenbegrenzung durch Interpolation (40, 50) eine Aufspaltung in zwei Signale erfolgt, die jeweils einer Amplitudenbegrenzung (42, 52) unterzogen werden und nach einer anschließenden Tiefpassfilterung (44, 54) wieder zusammengeführt werden.

10. Verfahren nach Anspruch 9, **dadurch gekennzeichnet,** daß zur Bestimmung der Ausgangssignale der Amplidudenbegrenzungen (42, 52) Stützwerte des Verlaufs der Übertragungsfunktion in zwei, mit dem Wert des jeweiligen Eingangssignals adressierbaren Speichern abgespeichert sind und einer dieser Speicher die geraden und der andere Speicher die ungeraden Stützwerte des Verlaufs der Übertragungsfunktion enthält.

## Claims

1.  A method of generating a modified video signal consisting of a correction signal and a video input signal, said correction signal being derived from a digitized input signal at least by a frequency-band limiter and an amplitude limiter, and said video input signal being delayed by the processing time of the correction signal,
    **characterized in that** the transfer function of the amplitude limiter (32, 42, 52) can be exactly described by a rational integral function of nth order

    $$Y = a_0 + a_1{}^*x + a_2{}^*x^2 + a_3 + x^3 \ldots a_n{}^*x^n,$$

    with $1 < n < f_n/f_s$, and n being an integer, where $f_n$ is the Nyquist frequency of the selected sampling frequency, $f_s$ is the maximum frequency of the band-limited video signal ($Y_{inf}$), x is the input to the amplitude limiter (32, 42, 52), $a_0$ to $a_n$ are scale factors, and y is the output of the amplitude limiter (32, 42, 52).

2.  A method as claimed in claim 1, characterized in that the transfer function of the amplitude limiter can be described by the function

    $$y = a_0{}^* x - a_1{}^* x^n \ (1 < n < \frac{f_n}{f_s}),$$

    where x is the input to the amplitude limiter (32, 42, 52), $a_0$ and $a_1$ are scale factors, and y is the output of the amplitude limiter (32, 42, 52).

3.  A method as claimed in claim 2, characterized in that the amplitude limiter (32, 42, 52) has a transfer function with a parabolic characteristic (f1) whose shape is determined by the function

$$y = \frac{a}{b^2} {}^* [\, 2bx - (sgn\ x) {}^* x^2 \,] \qquad |x| \le 2b,$$

where y is the output of the amplitude limiter (32, 42, 52), x is the input to the amplitude limiter (32, 42, 52), and a and 2b are the scale factors used to preset the maximum value of the output signal and the maximum value of the input signal, respectively.

4.  A method as claimed in any one of the preceding claims, characterized in that the amplitude limiter (32, 42, 52) is followed by a low-pass filter (34, 44, 54) for suppressing the harmonics.

5.  A method as claimed in any one of the preceding claims, characterized in that the amplitude limiter (32, 42, 52) is preceded by a scaling stage (22) and/ or a noise suppressor (28) for the band-limited video input signal ($Y_{inf}$).

6.  A method as claimed in claim 5, characterized in that for positive and negative input signals, the scaling in the scaling stage (22) is effected with different values ($k_{pos}$, $k_{neg}$).

7.  A method as claimed in any one of the preceding claims, characterized in that, to determine the output of the amplitude limiter (32, 42, 52), given values of the transfer characteristic are stored in a memory addressable by the value of the input signal.

8.  A method as claimed in any one of the preceding claims, characterized in that the amplitude limiter is preceded by an interpolator (30) wherein interpolation takes place at the double sampling rate, and that the interpolation is reversed by a decimation in a decimator (34) following the amplitude limiter (32).

9.  A method as claimed in any one of claims 1 to 7, characterized in that prior to the amplitude-limiting action, the input signal is split by interpolation (40, 50) into two signals which are passed through respective amplitude limiters (42, 52) and subsequent low-pass filters (44, 54) and then recombined.

10. A method as claimed in claim 9, characterized in that, to determine the outputs of the amplitude limiters (42, 52), given values of the transfer characteristic are stored in two memories addressable by the value of the respective input signal, one of said memories containing the even-numbered given values and the other the odd-numbered ones.

## Revendications

1.  Procédé de génération d'un signal vidéo modifié qui est composé de la somme d'un signal de correction extrait d'un signal vidéo d'entrée numérisé au moins par une limitation de la largeur de bande de fréquences et par une limitation de l'amplitude et d'un signal vidéo d'entrée retardé de la durée de traitement du signal de correction, caractérisé en ce que la fonction de transfert peut être décrite précisément par une fonction entière rationnelle de degré n

$$Y = a_0 + a_1 * x + a_2 * x^2 + a_3 * x^3 \dots a_n * x^n$$

avec $1 < n < f_n/f_s$ *et n entier,* $f_n$ étant la fréquence de Nyquist *de la fréquence d'échantillonnage choisie* et $f_s$ la fréquence maximale du signal vidéo limité en largeur de bande de fréquences ($Y_{inf}$) et x le signal d'entrée de la limitation en amplitude (32, 42, 52), $a_0$ à $a_n$ des facteurs scalaires et y le signal de sortie de la limitation en amplitude (32, 42, 52).

2. Procédé selon la revendication 1, caractérisé en ce que la fonction de transfert de la limitation en amplitude peut être décrite par la fonction

$$y = a_0 * x - a_1 * x^n \ (1 < n < f_n/f_s)$$

dans laquelle x est le signal d'entrée de la limitation en amplitude, $a_0$, $a_1$ des facteurs scalaires et y le signal de sortie de la limitation en amplitude (32, 42, 52).

3. Procédé selon la revendication 2, caractérisé en ce que pour la limitation en amplitude (32, 42, 52), on utilise une fonction de transfert avec une caractéristique de transfert parabolique ($f_1$) dont la courbe est déterminée par la fonction

$$y = a/b^2 * [\ 2bx - (sgn\ x) * x^2\ ] \qquad |x| \leq 2b$$

dans laquelle y est le signal de sortie de la limitation en amplitude (32, 42, 52), x le signal d'entrée de la limitation en amplitude (32, 42, 52) et en ce qu'au moyen des facteurs scalaires a et 2b, on règle au préalable la valeur maximale du signal de sortie et la valeur maximale du signal d'entrée.

4. Procédé selon l'une quelconque des revendications précédentes, caractérisé en ce qu'après la limitation en amplitude (32, 42, 52), on effectue un filtrage passe-bas (34, 44, 54) pour supprimer les harmoniques.

5. Procédé selon l'une quelconque des revendications précédentes, caractérisé en ce que, avant la limitation en amplitude (32, 42, 52), on effectue un cadrage (22) et/ou une suppression du signal de bruit (28) du signal d'entrée vidéo limité en largeur de bande de fréquences ($Y_{inf}$) ou du signal d'entrée x de la limitation en amplitude.

6. Procédé selon la revendication 5, caractérisé en ce que, pour des signaux d'entrée positifs et négatifs, le cadrage est effectué avec des valeurs différentes ($k_{pos}$, $k_{neg}$).

7. Procédé selon l'une quelconque des revendications précédentes, caractérisé en ce que, pour déterminer le signal de sortie de la limitation en amplitude (32, 42, 52), on mémorise des valeurs d'appui de la courbe de la fonction de transfert dans une mémoire adressable par la valeur du signal d'entrée.

8. Procédé selon l'une quelconque des revendications précédentes, caractérisé en ce que, avant la limitation en amplitude, on effectue une interpolation (30) à la fréquence d'échantillonnage double qui est faite selon une séquence inversée après la limitation en amplitude (32) au moyen d'une décimation.

9. Procédé selon l'une quelconque des revendications 1 à 7, caractérisé en ce que, avant la limitation en amplitude, on effectue, par interpolation (40, 50), une séparation en deux signaux qui sont soumis chacun à une limitation en amplitude (42, 52) et réunis de nouveau après un filtrage passe-bas (44, 54).

10. Procédé selon la revendication 9, caractérisé en ce que, pour la détermination des signaux de sortie des limitations en amplitude (42, 52), on mémorise des valeurs d'appui de la courbe de la fonction de transfert dans deux mémoires adressables par la valeur du signal d'entrée respectif et en ce que l'une de ces mémoires mémorise les valeurs d'appui paires et l'autre mémoire les valeurs d'appui impaires de la courbe de la fonction de transfert.

FIG. 1

FIG. 2

von 28 (FIG.1)

zu 16 (FIG.1)

$y_k$

Interpol 1    Dezimation 1

x    y

40    42    44

46

Interpol 2    Dezimation 2

x    y

50    52    54

EP 0 599 144 B1

9

FIG. 3

FIG. 4